# EUROPÄISCHE PATENTSCHRIFT

(11) **EP 1 999 725 B1**
(45) Veröffentlichungstag und Bekanntmachung des Hinweises auf die Patenterteilung: **02.11.2011**
(21) Anmeldenummer: 07726947.0
(22) Anmeldetag: 15.03.2007
(51) Int. Cl.: G07C 9/00, B60R 25/00

(54) **VERFAHREN ZUM SCHUTZ EINES BEWEGLICHEN GUTES, INSBESONDERE EINES FAHRZEUGS, GEGEN UNBERECHTIGTE NUTZUNG**
METHOD FOR THE PROTECTION OF A MOVABLE OBJECT, ESPECIALLY A VEHICLE, AGAINST UNAUTHORIZED USE
PROCÉDÉ DE PROTECTION D'UN BIEN MOBILE, NOTAMMENT D'UN VÉHICULE, CONTRE TOUTE UTILISATION NON AUTORISÉE

(30) Priorität: 30.03.2006 DE 102006015212
(43) Veröffentlichungstag der Anmeldung: 10.12.2008
(73) Patentinhaber: Bundesdruckerei GmbH, 10958 Berlin (DE)
(72) Erfinder: ZISKA, Andreas, 12107 Berlin (DE); MÜFFELMANN, Gunda, 15566 Schöneiche (DE); KÜTER, Joachim, 10179 Berlin (DE); BORTFELDT-HERKENDELL, Shirley, 10117 Berlin (DE)
(74) Vertreter: Richardt Patentanwälte
(86) Internationale Anmeldenummer: PCT/EP2007/052459
(87) Internationale Veröffentlichungsnummer: WO 2007/113093

(56) Entgegenhaltungen:
- EP-A- 1 281 588
- EP-A2- 1 439 100
- DE-C1- 19 508 369
- US-A1- 2002 095 507

## Beschreibung

Die Erfindung betrifft Verfahren zum Schutz eines beweglichen Gutes gegen unberechtigte Nutzung sowie ein entsprechendes bewegliches Gut, bei dem es sich um ein Flugzeug, ein Fahrzeug oder eine Baumaschine handelt.

Aus der EP 1281588 A2 ist ein Verfahren zur Übertragung eines Öffnungscodes bekannt. Ein Nutzer authentifiziert sich über eine Mobilfunkverbindung gegenüber einem Diensterbringungsrechner. Der Nutzer erhält daraufhin einen Öffnungscode zum Öffnen eines Codeschlosses. Aus den EP 1439100 A2 und US 2002/0095507 A1 sind entsprechende Verfahren bekannt, die auf einer Authentifizierung des Benutzers beruhen.

Aus der DE 19508369 C1 ist ein Verfahren zur Sicherung von Fahrzeugen vor unbefugter Nutzung bekannt. Das Fahrzeug empfängt von einer Zentrale Freigabesignale für die Nutzung des Fahrzeugs. Das Fahrzeug sendet an die Zentrale Signale, die unter anderem Ortungsinformationen des Fahrzeugs beinhalten, um das Fahrzeug nach einem eventuellen Diebstahl wieder auffinden zu können. Das Fahrzeug wird durch eine fahrzeugspezifische Kennung identifiziert. Die Signalübertragung zwischen dem Fahrzeug und der Zentrale erfolgt in codierter Form, um zu verhindern, dass Dritte entsprechende Signale aussenden können.

Aus der US 2002/0135466 A1 ist die Authentisierung eines mit einem Kraftfahrzeug koppelbaren PDAs gegenüber einem Server Computer bekannt. Der PDA hat dabei die Funktion eines Schlüssels für die Inbetriebnahme des Kraftfahrzeugs. Ein Nachteil ist, dass bei Diebstahl des PDAs der Dieb auch das Kraftfahrzeug nutzen kann. Ferner kann die Kraftfahrzeugelektronik manipuliert werden, um die Identität des Kraftfahrzeugs zu verändern.

Aus der DE 4440975 C2 ist eine Fremdnutzungsschutzeinrichtung für ein Kraftfahrzeug bekannt. Bei dieser Einrichtung ist vorgesehen, Nutzungssignale periodisch aufeinander folgend von einer fahrzeugexternen Stelle über eine Übertragungsstrecke auf der Basis elektromagnetischer Wellen auszusenden und eines oder mehrere fahrbetriebsnotwendige Fahrzeugaggregate durch die Nutzungssteuereinrichtung jeweils auf ein von letzterer empfangenes Nutzungssignal hin nur für eine vorgegebene Zeitdauer größer als der Zeitabstand zweier aufeinander folgender Nutzungssignale betriebsbereit zu halten, während ihr weiterer Betrieb und damit derjenige des Kraftfahrzeuges insgesamt gesperrt wird, sobald während dieser vorgegebenen Zeitdauer kein weiteres Nutzungssignal empfangen wird. Für die Nutzung des Kraftfahrzeugs ist also der Empfang nutzungsberechtigender Signale erforderlich.

Bei einem Diebstahl meldet der Berechtigte denselben bei der für die Ausstrahlung der Nutzungssignale autorisierten Stelle, die daraufhin das weitere Aussenden von Nutzungssignalen einstellt, wonach die Nutzungssteuerungseinrichtung den weiteren Fahrzeugbetrieb blockiert. Dies kann entweder unmittelbar nach dem Ausbleiben eines Nutzungssignales oder nach Ablauf eines weiteren Zeitintervalls geschehen. Wird beispielsweise innerhalb einer freigegebenen Aggregatbetriebsdauer kein weiteres Nutzungssignal mehr empfangen, so werden die betroffenen Fahrzeugaggregate von der Nutzungssteuereinrichtung noch über ein vorgegebenes Zeitintervall hinweg betriebsbereit gehalten, damit sich keine sicherheitskritischen Fahrzustände oder Verfügbarkeitsprobleme ergeben. Nach Ablauf dieses Zeitintervalls werden dann die betroffenen Fahrzeugaggregate von der Nutzungssteuerungseinrichtung nach dem nächsten Stehen des Fahrzeugs, zum Beispiel dem nächsten Abschalten der Zündung, in ihren betriebsblockierten Zustand gesteuert, so dass das Fahrzeug nicht mehr irr Fahrbereitschaft gesetzt werden kann.

Die Übertragung der Nutzungssignale über das Funknetz soll bereits dadurch weitestgehend manipulationssicher sein, dass es weder den Berechtigten noch vor allem einem Unberechtigten möglich sein dürfte, aus der Vielzahl abgestrahlter Nutzungssignale für die verschiedenen Fahrzeuge das für das betreffende Fahrzeug vorgesehene zu erkennen, um es anderweitig zu generieren und damit das System umgehen zu können. Fall gewünscht, kann zusätzlich eine codegestützte Nutzungssignalübertragung eingerichtet werden, wie sie zum Beispiel für die Nutzungscodeübertragung in Zugangsberechtigungssystemen mit elektronischer Schlüsselcodierung üblich ist.

Eine solche codegestützte Nutzungssignalübertragung, bei der das Kraftfahrzeug über einem dem Kraftfahrzeug zugeordneten Code identifiziert wird, kann jedoch ausgespäht werden, und durch Manipulation z.B. an der Kraftfahrzeugelektronik umgangen werden.

Der Erfindung liegt demgegenüber die Aufgabe zugrunde, ein verbessertes Verfahren zum Schutz eines beweglichen Gutes, insbesondere eines Fahrzeugs, gegen unberechtigte Nutzung sowie entsprechender Computerorogrammprodukte und Computersysteme zu schaffen und ferner ein verbessertes bewegliches Gut mit einem elektronischen Gerät zum Schutz gegen unberechtigte Nutzung.

Die der Erfindung zugrunde liegenden Aufgaben werden jeweils mit den Merkmalen der unabhängigen Patentansprüche definiert und gelöst. Bevorzugte Ausführungsformen der Erfindung sind in den abhängigen Patentansprüchen angegeben.

Unter beweglichem Gut werden erfindungsgemäß Flugzeuge, Fahrzeuge, insbesondere Kraftfahrzeuge, oder Baumaschinen, verstanden, die ein oder mehrere elektronische Komponenten aufweisen

Im Gegensatz zum Stand der Technik erfolgt erfindungsgemäß eine kryptographische Authentifizierung und/oder kryptographische Authentisierung des beweglichen Gutes selbst, z.B. des Kraftfahrzeugs, gegenüber dem externen Computersystem. Hierdurch ist sichergestellt, dass ein Nutzungssignal oder ein Sperrsignal, welches von dem Computersystem gesendet wird, das richtige Kraftfahrzeug erreicht, und nicht etwa ein gestohlenes Kraftfahrzeug, dessen Identität durch Manipulationen an der Kraftfahrzeugelektronik verändert worden ist.

Unter "Authentisierung" wird hier der Nachweis der Identität des Kraftfahrzeugs verstanden. Dieser Nachweis wird mittels eines kryptographischen Verfahren erbracht, dass z.B. auf einem dem Kraftfahrzeug oder dessen Kraftfahrzeugelektronik zugeordnetem asymmetrischen Schlüsselpaar und einem entsprechenden Zertifikat beruht. Das Zertifikat beinhaltet eine Kennung, die das Kraftfahrzeug und/oder dessen Kraftfahrzeugelektronik identifiziert.

Unter "Authentifizierung" wird hier die Überprüfung der bereits bekannten Identität des Kraftfahrzeugs und/oder dessen Kraftfahrzeugelektronik verstanden. Beispielsweise kann also die Authentisierung auch ohne kryptographische Verfahren erfolgen, wenn nachfolgend eine Überprüfung der Identität, d.h. die Authentifizierung, mittels eines kryptographischen Verfahrens erfolgt, oder umgekehrt. Auch die Authentifizierung kann auf einem dem Kraftfahrzeug oder dessen Kraftfahrzeugelektronik zugeordnetem asymmetrischen Schlüsselpaar und einem entsprechenden Zertifikat beruhen.

Nach einer Ausführungsform der Erfindung erfolgt also die kryptographische Authentifizierung und/oder kryptographische Authentisierung unter Verwendung eines asymmetrischen Schlüsselpaars, welches dem Kraftfahrzeug zugeordnet ist.

Für die Durchführung der kryptographischen Authentifizierung und/oder kryptographische Authentisierung generiert das Computersystem beispielsweise eine Zufallszahl, insbesondere ein Pseudo-Zufallszahl. Die Pseudo-Zufallszahl wird von dem Computersystem unverschlüsselt an das bewegliche Gut, z.B. an das Kraftfahrzeug gesendet. Durch die Kraftfahrzeugelektronik wird die Pseudo-Zufallszahl mit Hilfe des geheimen Schlüssels, der dem. Kraftfahrzeug zugeordnet ist, verschlüsselt. Die verschlüsselte Pseudo-Zufallszahl wird zusammen mit dem Zertifikat des Kraftfahrzeugs von dem Kraftfahrzeug an das Computersystem zurückgesendet.

Das Computersystem entschlüsselt dann die verschlüsselt empfangene Pseudo-Zufallszahl mit Hilfe des öffentlichen Schlüssels des empfangenen Zertifikats. Wenn beide Pseudo-Zufallszahlen übereinstimmen, so bedeutet dies, dass das dem Kraftfahrzeug zugeordnete asymmetrische Schlüsselpaar bestehend aus geheimen und öffentlichen Schlüssel und das entsprechende Zertifikat gültig sind. Über das dem asymmetrischen Schlüsselpaar zugeordnete Zertifikat ist damit die Identität des Kraftfahrzeugs eindeutig belegt.

Nach einer Ausführungsform der Erfindung hat das externe Computersystem eine Datenbank zur Speicherung von Sperrungen. Wird beispielsweise ein Kraftfahrzeug als gestohlen gemeldet, so wird eine entsprechende Sperrung in der Datenbank eingetragen. Nach Durchführung der kryptographischen Authentifizierung greift das Computersystem auf die Datenbank zu, um festzustellen, ob das Kraftfahrzeug, hinsichtlich dessen die kryptographische Authentifizierung und/oder kryptographische Authentisierung erfolgt ist, in der Datenbank als gesperrt erfasst ist. Wenn dies der Fall ist, sendet das Computersystem ein entsprechendes Sperrsignal an das Kraftfahrzeug, so dass dieses zum Beispiel nach Abschalten der Zündung nicht mehr gestartet werden kann.

Erfindungsgemäß empfängt das Computersystem einen signierten Code von dem Kraftfahrzeug. Das Computersystem überprüft den signierten Code auf Gültigkeit. Nur wenn der signierte Code gültig ist und zusätzlich keine Sperrung des Kraftfahrzeugs in der Datenbank gespeichert ist, sendet das Computersystem an das Kraftfahrzeug das Nutzungssignal, um die Nutzung des Kraftfahrzeugs zu ermöglichen.

Bei dem Code kann es sich beispielsweise um eine Seriennummer, Typnummer, Herstellernummer und/oder eine Verkettung solcher Nummern oder durch einen anderen Algorithmus aus einer oder mehreren solcher Nummern gewonnenen Code handeln. Beispielsweise gehen die Seriennummern von einer oder mehreren der Komponenten der Kraftfahrzeugelektronik in die Erzeugung des Codes ein. Beispielsweise wird der Code durch Aneinanderreihen der Seriennummern gewonnen. Alternativ oder zusätzlich wird ein Hash-Wert aus einer Seriennummer oder aneinander gereihten Serien-, Typ- und/oder Herstellernummern gebildet, der dann als Code dient.

Der so erhaltene Code wird von der Kraftfahrzeugelektronik signiert und an das externe Computersystem übertragen, wo der signierte Code auf Gültigkeit überprüft wird. Wird bei einem Manipulationsversuch der Kraftfahrzeugelektronik eine der Komponenten der Kraftfahrzeugelektronik, die zum Beispiel mit ihrer Seriennummer zur Gewinnung des Codes beiträgt, ausgetauscht, so führt dies zu einem geänderten Code und damit zwangsläufig zu einer Ungültigkeit des signierten Codes, der von dem externen Computersystem empfangen wird. Wenn das externe Computersystem die Ungültigkeit des Codes feststellt, führt dies zur Abgabe des Sperrsignals.

Nach einer Ausführungsform der Erfindung werden sowohl das Nutzungssignal als auch das Sperrsignal mit einem geheimen Schlüssel des Computersystems signiert. Die Signatur wird in beiden Fällen von der Kraftfahrzeugelektronik überprüft, bevor das Nutzungssignal bzw. das Sperrsignal wirksam werden kann. Dadurch ist sichergestellt, dass Nutzungssignale oder Sperrsignale nicht durch eine hierzu nicht autorisierte Stelle versendet werden können.

Nach einer Ausführungsform der Erfindung wird das Zertifikat für das der Kraftfahrzeugelektronik zugeordnete Schlüsselpaar durch ein Ersatzzertifikat ersetzt, wenn beispielsweise eine Komponente der Kraftfahrzeugelektronik für eine Reparatur ausgetauscht werden muss. In diesem Fall kann sich nämlich durch den Austausch der Komponente der Code ändern. Die Anforderung des Ersatzzertifikats ist vorzugsweise autorisierten Werkstätten vorbehalten.

Nach einer Ausführungsform der Erfindung gehört das externe Computersystem zu einem Trust-Center einer so genannten Public Key Infrastructure (PKI).

In einem weiteren Aspekt betrifft die Erfindung ein Computerprogrammprodukt zur Durchführung eines erfindungsgemäßen Verfahrens zum Beispiel auf dem Computersystem eines Trust-Centers.

In einem weiteren Aspekt betrifft die Erfindung ein Verfahren zum Schutz eines Kraftfahrzeugs, welches durch die Kraftfahrzeugelektronik ausgeführt wird.

Nach einer Ausführungsform der Erfindung wird durch die Kraftfahrzeugelektronik ein dem Kraftfahrzeug zugeordneter Code signiert, und der signierte Code wird an das externe Computersystem gesendet, damit dort der signierte Code auf Gültigkeit überprüft werden kann. Beispielsweise wird der dem Kraftfahrzeug zugeordnete Code aus einer oder mehreren Kennungen der Komponenten der Kraftfahrzeugelektronik gewonnen, wie zum Beispiel aus Serien-, Typ- und/oder Herstellerkennungen, die in den Komponenten der Kraftfahrzeugelektronik gespeichert sind. Bei dem dem Kraftfahrzeug zugeordneten Code handelt es sich also um ein Charakteristikum dieses Kraftfahrzeugs, welches durch die konkrete Zusammenstellung seiner Komponenten definiert ist, also gewissermaßen einen "Fingerabdruck" des Kraftfahrzeugs.

Nach einer Ausführungsform der Erfindung wird ein Positionssignal generiert, welches die aktuelle geographische Position des Kraftfahrzeugs angibt, nachdem ein Sperrsignal empfangen worden ist. Dies erleichtert es, das als gestohlen gemeldete Kraftfahrzeug wieder aufzufinden.

In einem weiteren Aspekt betrifft die Erfindung ein Computerprogrammprodukt mit von einer Kraftfahrzeugelektronik ausführbaren Instruktion zur Durchführung eines erfindungsgemäßen Verfahrens.

In einem weiteren Aspekt betrifft die Erfindung ein Kraftfahrzeugelektronik-Gerät, wie zum Beispiel eine Electronic Control Unit (ECU), mit Mitteln zur kryptographische Authentifizierung und/oder kryptographischen Authentisierung des Kraftfahrzeugs gegenüber einem Computersystem und Mitteln zum Empfang eines Nutzungssignals oder eines Sperrsignals vom dem Computersystem.

Für die Generierung des für das Kraftfahrzeug charakteristischen Codes können die einzelnen Komponenten der Kraftfahrzeugelektronik für eine kryptographische Authentifizierung und/oder kryptographischen Authentisierung gegenüber einem Steuergerät und/oder untereinander ausgebildet sein, um Manipulationen zu unterbinden.

Im Weiteren werden Ausführungsbeispiele der Erfindung mit Bezugnahme auf die Zeichnungen näher erläutert. Es zeigen:
- Figur 1: ein Blockdiagramm einer Ausführungsform eines Computersystems und einer erfindungsgemäßen Kraftfahrzeugelektronik,
- Figur 2: ein Flussdiagramm von Schritten eines erfindungsgemäßen Verfahrens,
- Figur 3: ein Blockdiagramm einer weiteren Ausführungsform eines Computersystems und einer erfindungsgemäßen Kraftfahrzeugelektronik,
- Figur 4: ein Blockdiagramm einer weiteren Ausführungsform eines Computersystems und einer erfindungsgemäßen Kraftfahrzeugelektronik,
- Figur 5: ein Flussdiagramm einer Ausführungsform eines erfindungsgemäßen Verfahrens,
- Figur 6: ein Blockdiagramm einer weiteren Ausführungsform eines Computersystems eines Trust-Centers und eines Sperrdienstes sowie einer erfindungsgemäßen Kraftfahrzeugelektronik,
- Figur 7: ein Flussdiagramm von Schritten eines Verfahrens,
- Figur 8: ein Flussdiagramm eines weiteren Verfahrens,
- Figur 9: ein Blockdiagramm einer Ausführungsform eines Computersystems für ein Trust-Center, eines Werkstattrechners und einer erfindungsgemäßen Kraftfahrzeugelektronik,
- Figur 10: ein Flussdiagramm eines weiteren Verfahrens.

Elemente der nachfolgenden Beschreibungen, die einander entsprechen, sind mit denselben Bezugszeichen gekennzeichnet.

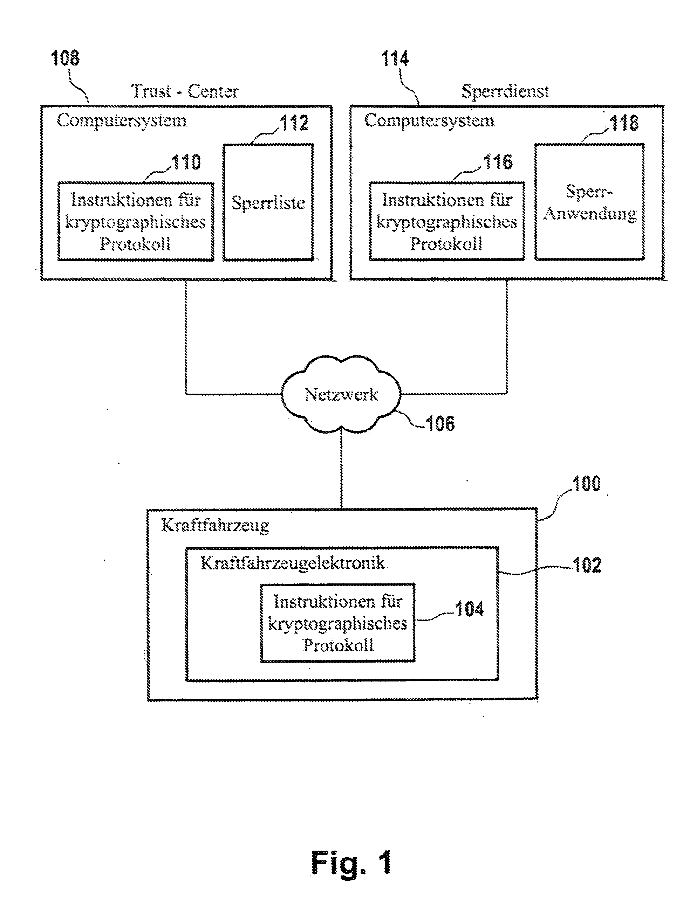

Die Figur 1 zeigt schematisch ein Kraftfahrzeug 100, bei dem es sich beispielsweise um einen Pkw oder ein Nutzfahrzeug handeln kann. Insbesondere handelt es sich bei dem Kraftfahrzeug 100 um ein hochpreisiges Kraftfahrzeug, welches besonders gegen Diebstahl geschützt werden soll.

Das Kraftfahrzeug 100 hat eine Kraftfahrzeugelektronik 102, die ein oder mehrere Kraftfahrzeugelektronik-Geräte aufweise kann. Bei den Kraftfahrzeugelektronik-Geräten kann es sich zum Beispiel um so genannte Electronic Control Units (ECUs) handeln, die miteinander zum Beispiel über einen CAN- und/oder LIN-Bus kommunizieren können.

Durch die Kraftfahrzeugelektronik 102 können Instruktionen 104 eines Computerprogramms ausgeführt werden, um- ein- kryptographisches Protokoll zu implementieren. Alternativ oder zusätzlich kann die Kraftfahrzeugelektronik 102 einen Chipkartenleser, zum Beispiel für eine Chipkarte im Subscriber Identity Module (SIM)-Format, beinhalten, welche einen Mikroprozessor zur Ausführung der Instruktionen 104 aufweist.

Das Kraftfahrzeug 100 ist über ein Netzwerk 106 mit einem externen Computersystem 108 verbindbar. Bei dem Netzwerk 106 kann es sich um ein öffentliches Kommunikationsnetzwerk handeln, wie zum Beispiel ein Mobilfunknetzwerk und/oder ein Computernetzwerk, insbesondere das Internet. Die Kommunikation zwischen der Kraftfahrzeugelektronik 102 und dem Computersystem 108 kann über eine Mobilfunkverbindung, wie zum Beispiel GSM, UMTS oder CDMA erfolgen, oder mit Hilfe einer anderen Funkverbindung, zum Beispiel über UKW analog zu oder als Teil von TMC. Es können auch für den Uplink, d.h. von der Kraftfahrzeugelektronik 102 zu dem Computersystem 108, und für den Downlink, d.h. für die Kommunikationsverbindung von dem Computersystem 108 zu der Kraftfahrzeugelektronik 102, unterschiedliche Nachrichtenkanäle verwendet werden. Dies gilt analog für die Kommunikation zwischen den Computersystemen 108 und 114.

Das externe Computersystem 108 befindet sich vorzugsweise in einer Hochsicherheitsumgebung, beispielsweise in einem so genannten Trust-Center. Das Computersystem 108 dient zur Ausführung von Instruktionen 110 eines Computerprogramms zur Implementierung des kryptographischen Protokolls.

Mit Hilfe des kryptographischen Protokolls wird die Identität des Kraftfahrzeugs 100 festgestellt und/oder überprüft. Das Kraftfahrzeug 100 wird beispielsweise durch einen kraftfahrzeugspezifischen Code, oder eine andere Kennung, wie zum Beispiel das amtliche Kennzeichen des Kraftfahrzeugs, eindeutig identifiziert. Ein solcher das Kraftfahrzeug identifizierender Code oder eine solche Kennung oder Kennzeichen werden im Weiteren als Kraftfahrzeug Identifier (Kfz ID) bezeichnet.

Mit der Kfz ID als Schlüssel kann das Computersystem 108 auf einen Speicher 112 zugreifen, in dem die Kfz IDs von gesperrten Kraftfahrzeugen gespeichert sind, hinsichtlich derer eine Verlustmeldung erfolgt ist. Eine entsprechende Sperrliste von gesperrten Kraftfahrzeugen kann in dem Speicher 112 in Form einer Datenbank gespeichert sein.

Die Eingabe einer Sperrung in den Speicher 112 kann unmittelbar über das Computersystem 108 erfolgen. Es ist jedoch auch möglich, dass eine solche Sperrung von einem weiteren Computersystem 114 aus eingegeben wird, welches mit dem Computersystem 108 über das Netzwerk 106 oder eine andere Kommunikationsverbidung Daten austauschen kann.

In der hier betrachteten Ausführungsform dient das Computersystem 114 ebenfalls zur Ausführung von Instruktionen 116 eines Computerprogramms zur Implementierung eines kryptographischen Protokolls. Mit Hilfe des kryptographischen Protokolls wird die Identität des Computersystems 114 und dessen Berechtigung zur Eingabe einer Sperrung eines Kraftfahrzeugs in den Speicher 112 festgestellt und/oder überprüft. Das Computersystem 114 hat ferner ein Anwendungsprogramm 118, welches zur Erfassung von Verlustmeldungen von Kraftfahrzeugen dient.

Solange die Nutzung des Kraftfahrzeuges 100 durch einen hierzu berechtigten Nutzer erfolgt, ist für das Kraftfahrzeug 100 in dem Speicher 112 keine Sperrung gespeichert. Zum Beispiel beim Starten des Kraftfahrzeugs 100 wird die Ausführung der Instruktionen 104 durch die Kraftfahrzeugelektronik 102 bzw. durch die Chipkarte gestartet. Die Kraftfahrzeugelektronik 102 stellt eine Verbindung über das Netzwerk 106 mit dem Computersystem 108 her, so dass dort die Ausführung der Instruktionen 110 gestartet wird. Durch die Ausführung der Instruktionen 104 von der Kraftfahrzeugelektronik 102 und durch die Ausführung der Instruktionen 110 durch das Computersystem 108 wird ein kryptographisches Protokoll realisiert aufgrund dessen z.B. die Authentizität der Kfz ID des Kraftfahrzeugs geprüft wird. Die Kommunikation zwischen der Kraftfahrzeugelektronik 102 und dem Computersystem 108 über das Netzwerk 106 erfolgt beispielsweise nach einem so genannten Request-Response Protokoll, z.B. http oder https.

Nachdem das Kraftfahrzeug 100 gegenüber dem Computersystem 108 durch Abarbeitung des kryptographischen Protokolls authentifiziert und/ authentisiert worden ist, prüft das Computersystem 108, ob eine Sperrung des Kraftfahrzeugs 100 in dem Speicher 112 gespeichert ist. Da dies hier nicht der Fall ist, gibt das Computersystem 108 daraufhin ein Nutzungssignal ab, welches über das Netzwerk 106 an das Kraftfahrzeug 100 übertragen wird. Erst aufgrund des Empfangs des Nutzungssignals kann eine Nutzung des Kraftfahrzeugs 100 erfolgen. Beispielsweise kann erst nach Empfang des Nutzungssignals der Motor des Kraftfahrzeugs 100 gestartet werden oder eine Wegfahrsperre deaktiviert werden, oder die Handbremse und/oder die Bremsen des Kraftfahrzeugs 100 sind erst dann lösbar, nachdem das Nutzungssignal empfangen worden ist.

Das Nutzungssignal kann eine gewisse Gültigkeitszeitdauer haben, so dass dieser Vorgang jeweils vor Ablauf der Gültigkeitszeitdauer während des Betriebs des Kraftfahrzeugs 100 wiederholt wird.

Wenn das Kraftfahrzeug 100 gestohlen worden ist, so kann sich der Eigentümer des Kraftfahrzeugs 100 an einen Sperrdienst wenden, der das Computersystem 114 betreibt. Beispielsweise kann der Sperrdienst durch einen Dienstleister, eine Behörde oder durch die Polizei zur Verfügung gestellt werden.

Wenn der Eigentümer den Verlust seines Kraftfahrzeugs 100 meldet, so wird dies mit Hilfe des Anwendungsprogramms 118 erfasst. Das Computersystem 114 baut eine Verbindung mit dem Computersystem 108 auf, und es erfolgt eine kryptographische Authentifizierung und/oder kryptographischen Authentisierung des Computersystems 114 gegenüber dem Computersystem 108, um sicherzustellen, dass nur von einem hierzu autorisierten Computersystem eine Sperranforderung gespeichert wird. Nach erfolgreicher kryptographischer Authentifizierung und/oder kryptographischen Authentisierung des Computersystems 114 gegenüber dem Computersystem 108 wird die Sperranforderung beispielsweise mit der Kfz ID von dem Computersystem 114 über das Netzwerk 106 an das Computersystem 108 übertragen, und dort in dem Speicher 112 gespeichert.

Wenn nach dem Diebstahl des Kraftfahrzeugs 100 und nachdem die Sperrung in dem Speicher 112 gespeichert worden ist, die Zündung des Kraftfahrzeugs 100 betätigt wird, so wird erneut die Ausführung der Instruktionen 104 durch die Kraftfahrzeugelektronik 102 gestartet. Nach Authentifizierung und/oder Authentisierung des Kraftfahrzeugs 100 gegenüber dem Computersystem 108 stellt dieses jedoch fest, dass für dieses Kraftfahrzeug 100 eine Sperrung in dem Speicher 112 abgelegt ist. Daher sendet das Computersystem 108 kein Nutzungssignal an das Kraftfahrzeug 100, so dass dieses nicht benutzt werden kann. Im Gegenteil kann das Computersystem 108 in diesem Fall ein Sperrsignal an das Kraftfahrzeug 100 senden, um dieses stillzulegen.

Wenn ein Manipulationsversuch an der Kraftfahrzeugelektronik 102 unternommen worden ist, um diesen Sicherheitsmechanismus zu umgehen, indem eine oder mehrere der Komponenten der Kraftfahrzeugelektronik 102 ausgetauscht worden sind, so führt dies zu einer Änderung der Kfz ID, so dass bereits die kryptographische Authentifizierung und/oder die kryptographische Authentisierung fehlschlägt. Auch in diesem Fall wird kein Nutzungssignal abgegeben.

Das durch die Instruktionen 104 und 110 bzw. 116 und 110 implementierte kryptographische Protokoll kann beispielsweise wie folgt ablaufen:
Die Kraftfahrzeugelektronik 102 sendet eine Anforderung ("request") an das Computersystem 108. Daraufhin generiert das Computersystem 108 eine Zufallszahl, insbesondere eine Pseudo-Zufallszahl. Die Zufallszahl wird von dem Computersystem 108 über das Netzwerk 106 an das Kraftfahrzeug 100 zurückgesendet. Die Kraftfahrzeugelektronik 102 verschlüsselt die empfangene Zufallszahl mit Hilfe ihres geheimen Schlüssels, der zum Beispiel auf der Chipkarte gespeichert ist, so dass die Kraftfahrzeugelektronik ein Chiffrat erhält.

Dieses Chiffrat wird von der Kraftfahrzeugelektronik 102 an das Computersystem 108 als Response zurückgesendet sowie auch das Zertifikat der Kraftfahrzeugelektronik 102. Das Computersystem entschlüsselt das Chiffrat mit Hilfe des öffentlichen Schlüssels des Zertifikats. Stimmt die von dem Computersystem 108 generierte Zufallszahl mit der als Response von der Kraftfahrzeugelektronik 102 empfangenen Zufallszahl überein, so ist die Authentifizierung und/oder Authentisierung des Kraftfahrzeugs 100 erfolgreich abgeschlossen.

Beispielsweise sendet die Kraftfahrzeugelektronik 102 zusammen mit dem initialen Request zum Start des kryptographischen Protokolls das zu deren Schlüsselpaar gehörende Zertifikat, an das Computersystem 108. In dem Zertifikat kann die Kfz ID des Kraftfahrzeugs 100 vermerkt sein, so dass das Computersystem 108 auf diese Art und Weise in der Form des Kfz ID einen Zugriffsschlüssel zum Zugriff auf den Speicher 112 erhält, um zu überprüfen, ob hinsichtlich dieses Kraftfahrzeugs eine Sperrung gespeichert ist.

Nach dem gleichen Prinzip kann auch die kryptographische Authentifizierung und/oder kryptographischen Authentisierung des Computersystems 114 gegenüber dem Computersystem 108 ablaufen. Das Computersystem 114 erhält also von dem Computersystem 108 eine mit dem öffentlichen Schlüssel des Computersystems 114 verschlüsselte Zufallszahl, die das Computersystem 114 mit seinem geheimen Schlüssel entschlüsselt, und daraufhin die Zufallszahl an das Computersystem 108 zurückschickt. Stimmen die von dem Computersystem 108 verschlüsselte Zufallszahl und die als Response von dem Computersystem 114 zurückerhaltene Zufallszahl überein, so ist wiederum die kryptographische Authentifizierung und/oder kryptographischen Authentisierung erfolgreich abgeschlossen.

Für die Erfassung von Verlustmeldungen können dezentral verteilt verschiedene Computersysteme 114 vorhanden sein, die jeweils über das Netzwerk 106 mit dem Computersystem 108 kommunizieren können. Beispielsweise befinden sich solche Computersysteme 114 bei Polizeidienststellen, hierzu autorisierten Vertragshändlern oder autorisierten Werkstätten und/oder in Callcentern, bei denen der Verlust eines Kraftfahrzeugs telefonisch oder auf anderem Wege, wie zum Beispiel per E-Mail, gemeldet werden kann.

Hierdurch ist ein effektiver Schutz des Kraftfahrzeugs gegen unberechtigte Nutzung gegeben, der einen Diebstahl unattraktiv macht. Da erfindungsgemäß keine vom Fahrer unmittelbar zu beeinflussenden Sicherheitseinrichtungen, wie zum Beispiel biometrische Sicherheitseinrichtungen oder Alarme erforderlich sind, wird ferner das Bedrohungspotential für den berechtigten Nutzer des Kraftfahrzeugs reduziert.

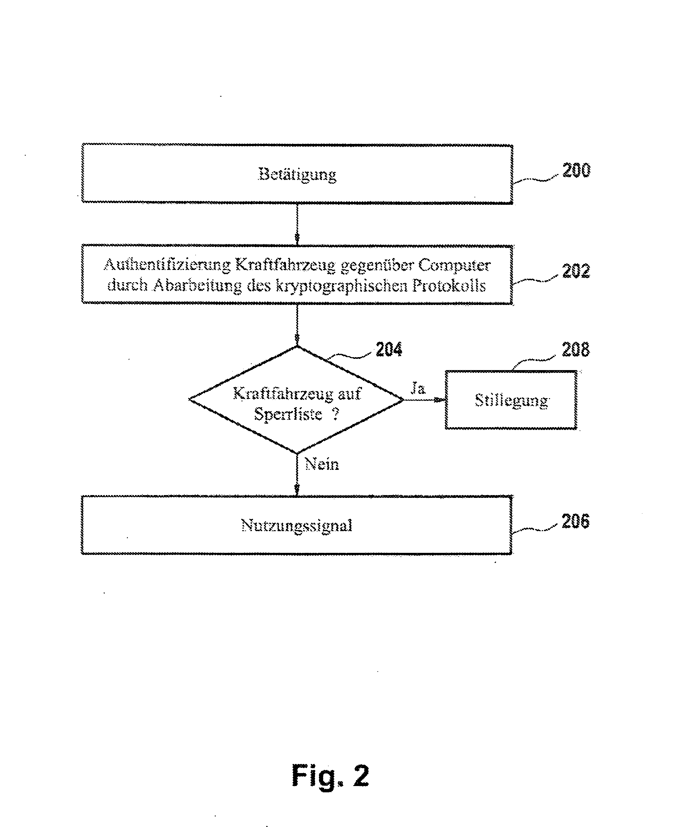

Die Figur 2 zeigt ein entsprechendes Flussdiagramm. In dem Schritt 200 erfolgt die Betätigung eines Bedienelements des Kraftfahrzeugs, wie zum Beispiel die Betätigung der Zentralverriegelung, um das Kraftfahrzeug zu öffnen, die Betätigung des Starters des Kraftfahrzeugs, um den Motor zu starten oder die Betätigung einer Hand- oder Feststellbremse, um diese zu lösen.

Durch eine solche Betätigung in dem Schritt 200 wird der nachfolgende Ablauf zur kryptographischen Authentifizierung und/oder zur kryptographischen Authentisierung zum. Empfang eines Nutzungs- oder Sperrsignals gestartet. Der Start dieses Ablaufs bereits zum Beispiel durch die Betätigung einer Fernsteuerung zum Öffnen des Kraftfahrzeugs hat den Vorteil, dass während sich der Fahrer dem Kraftfahrzeug nähert und in dieses einsteigt bereits das Verfahren abläuft und unter Umständen sogar bereits sogar abgeschlossen sein kann, wenn das Fahrer das Kraftfahrzeug erreicht hat, so dass der Fahrer, nachdem er in das Kraftfahrzeug eingestiegen ist, ohne oder ohne merkliche zeitliche Verzögerung das Kraftfahrzeug in Betrieb nehmen kann.

Der Start dieses Ablaufs kann auch automatisch erfolgen, nachdem z.B. ein sog. Keyless-go Verriegelungssystem angesprochen hat. Wenn also das Verriegelungssystem die RFID Schlüsselkarte in der Nähe des Fahrzeugs sensiert, erfolgt dadurch der Start des Ablaufs.

In dem Schritt 202 erfolgt die Authentifizierung und/oder Authentisierung des Kraftfahrzeugs gegenüber einem Computer des zuständigen Trust-Centers durch Abarbeitung eines kryptographischen Protokolls (vgl. hierzu die Instruktionen 104 und 110 der Figur 1).

Nach erfolgreicher kryptographischer Authentifizierung und/oder Authentisierung des Kraftfahrzeugs wird durch das Trust-Center geprüft, ob das Kraftfahrzeug auf einer Sperrliste vermerkt ist. Wenn dies nicht der Fall ist, wird für das Kraftfahrzeug ein kraftfahrzeugspezifisches Nutzungssignal generiert und in dem Schritt 206 an das Kraftfahrzeug übertragen.

Vorzugsweise ist das Nutzungssignal von dem Trust-Center signiert. Die Signatur des Nutzungssignals wird mit Hilfe des öffentlichen Schlüssels des Trust-Centers durch die Kraftfahrzeugelektronik überprüft. Nur wenn die Signatur des Nutzungssignals gültig ist, wird dieses von der Kraftfahrzeugelektronik akzeptiert, um eine Nutzung des Kraftfahrzeugs zu ermöglichen. Vorzugsweise beinhaltet das Nutzungssignal auch die Kfz ID des betreffenden Kraftfahrzeugs.

Im gegenteiligen Fall, d.h. wenn das Kraftfahrzeug auf der Sperrliste vermerkt ist, wird ein Sperrsignal generiert und zu dem Kraftfahrzeug übertragen (Schritt 208). Dies führt entweder sofort oder zum Beispiel beim nächsten Starten des Kraftfahrzeugs zu dessen Stilllegung.

Auf das Sperrsignal kann die Kraftfahrzeugelektronik mit einer Nachricht antworten, die die aktuellen geographischen Positionsdaten des Kraftfahrzeugs beinhaltet. Dies vereinfacht das Wiederauffinden des Kraftfahrzeugs.

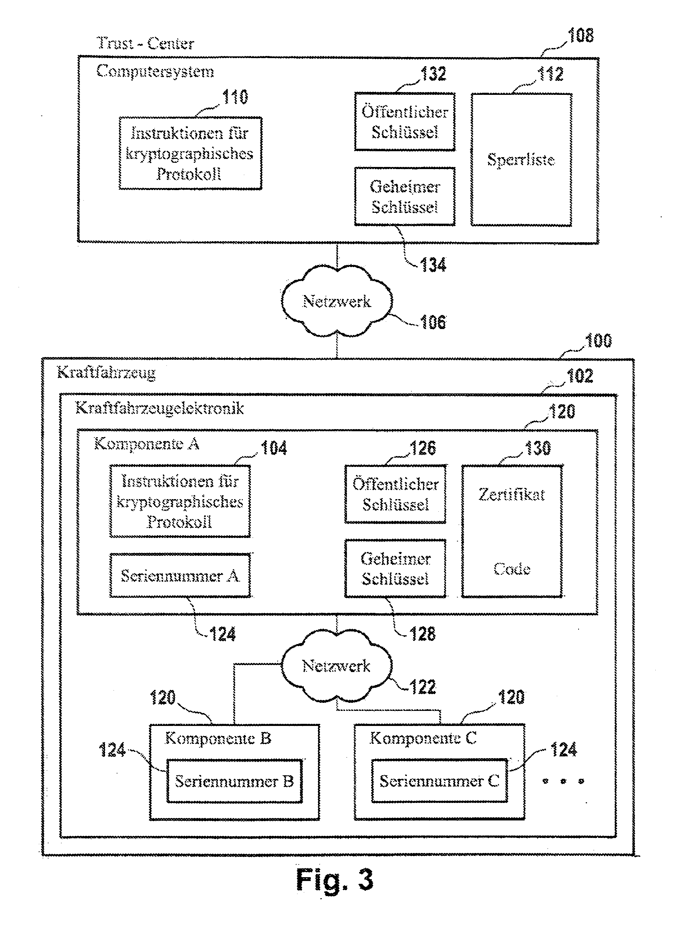

Die Figur 3 zeigt eine weitere Form des Computersystems 108 des Trust-Centers und der Kraftfahrzeugelektronik 102. In dem Computersystem 108 sind der öffentliche Schlüssel 132 und der geheime Schlüssel 134 des Trust-Centers 108 für die Durchführung des kryptographischen Protokolls sowie für die Signierung von Nutzungs- und Sperrsignalen gespeichert.

In der hier betrachteten Ausführungsform hat die Kraftfahrzeugelektronik 102 verschiedene Komponenten 120, wie zum Beispiel die Komponenten A, B, C, ..., die über einen Kraftfahrzeugnetzwerk 122 miteinander verbunden sind. Bei dem Kraftfahrzeugnetzwerk 122 kann es sich zum Beispiel um einen CAN- und/oder LIN-Bus handeln.

Jeder der Komponenten 120 ist eine Kennung zugeordnet, die in einem nicht flüchtigen und nicht ohne Weiteres manipulierbaren Speicher der jeweiligen Komponente gespeichert ist. Beispielsweise handelt es sich bei dieser Kennung um die jeweilige Seriennummer, die in einem solchen Speicher 124, der jeweiligen Komponente 120 gespeichert ist.

Zumindest eine der Komponenten 120 hat Zugriff auf ein Schlüsselpaar bestehend aus einem öffentlichen Schlüssel 126 und einem geheimen Schlüssel 128, das dem Kraftfahrzeug 100 zugeordnet ist. Zu dem Schlüsselpaar 126, 128 gehört ein Zertifikat 130.

In dem Zertifikat 130 ist zum Beispiel ein Code gespeichert, der zur Identifizierung des Kraftfahrzeugs 100 dient. Dieser Code wird beispielsweise durch Ausführung der Instruktionen 104, die einen vorgegebenen Algorithmus implementieren, dadurch gewonnen, dass die Seriennummern A, B, C von den verschiedenen Komponenten 120 abgefragt werden, um auf der Basis dieser Seriennummern A, B, C, ... mit Hilfe des vorgegebenen Algorithmus den Code zu generieren.

Für die Durchführung des kryptographischen Protokolls ermitteln die Instruktionen 104 den Code durch Abfrage der Seriennummern A, B, C, ... von den Komponenten 120. Der so erhaltene Code wird dem geheimen Schlüssel 128 signiert und zusammen mit dem Zertifikat 130 an das Computersystem 108 übertragen. Das Computersystem 108 überprüft die Gültigkeit des signierten Codes mit Hilfe des öffentlichen Schlüssels 126. Nur wenn der signierte Code in Ordnung ist, d.h. mit dem in dem Zertifikat 130 gespeicherten Code übereinstimmt, ist die kryptographische Authentifizierung und/oder Authentisierung erfolgreich.

Die Gewinnung dieses Codes aus den Seriennummern für die Zwecke der kryptographischen Authentifizierung hat den Vorteil, dass bei Austausch einer der Komponenten 120 der Kraftfahrzeugelektronik 102 sich damit zwangsläufig auch der resultierende Code ändert. In diesem Fall stimmen aber der durch Abfrage der Seriennummern erlangte Code und der in dem Zertifikat 130 gespeicherte Code nicht mehr überein, so dass die kryptographische Authentifizierung fehlschlagen muss. Die Manipulation der Kraftfahrzeugelektronik 102 durch Austausch von einer oder mehreren von deren Komponenten 120 wird dadurch unterbunden.

Das Schlüsselpaar 126, 128 und das Zertifikat 130 können auf einer Chipkarte gespeichert sein, die auch zumindest einen Teil der Instruktionen 104 ausführt. In diesem Fall hat die Komponente A einen Chipkartenleser, in dem die Chipkarte steckt, um auf die entsprechenden kryptographischen Funktionalitäten zugreifen zu können.

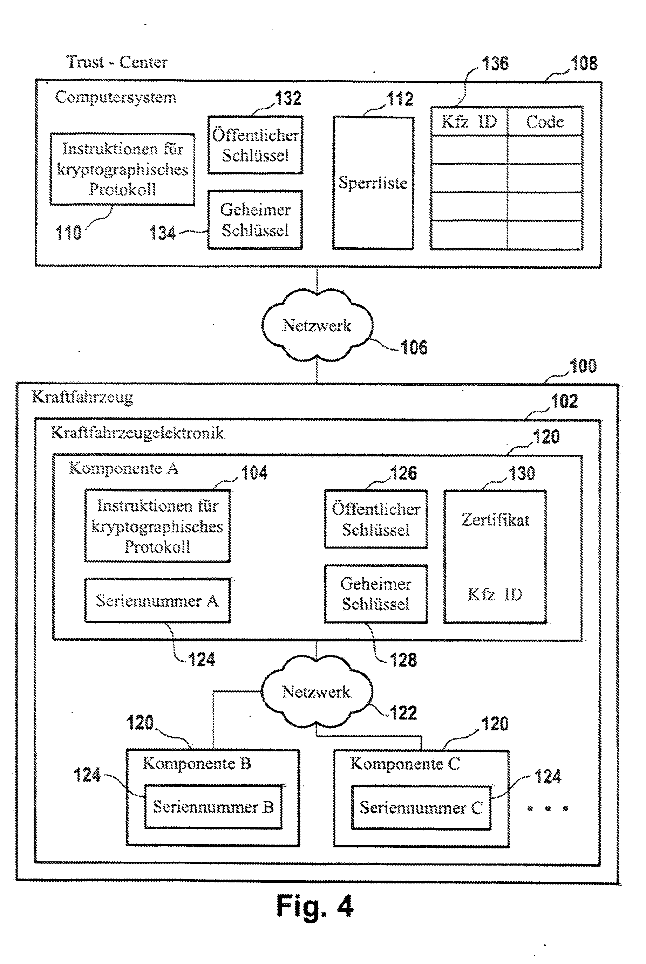

Die Figur 4 zeigt eine alternative Ausführungsform, bei der das Zertifikat nicht den aus den Seriennummern gewonnenen Code, sondern eine andere eindeutige Kfz ID beinhaltet. Bei dieser Kfz ID kann es sich beispielsweise um die Seriennummer des Kraftfahrzeugs selbst, die Fahrgestellnummer, das amtliche Kennzeichen oder eine andere eindeutige Kennung handeln.

Seitens des Computersystems 108 ist eine Zuordnungstabelle 136 gespeichert, die jeder registrierten Kfz ID den entsprechenden Code zuordnet.

Zur Durchführung des kryptographischen Protokolls ermittelt also die Kraftfahrzeugelektronik aus den verschiedenen Seriennummern der Komponenten 120 den kraftfahrzeugspezifischen Code. Dieser wird mit dem geheimen Schlüssel 128 signiert und zusammen mit dem Zertifikat 130 an das Computersystem 108 über das Netzwerk 106 übertragen. Das Computersystem 108 greift mit der Kfz ID als Schlüssel auf die Zuordnungstabelle 136 nach, um von dort den der Kfz ID zugeordneten kraftfahrzeugspezifischen Code auszulesen. Dieser Code muss mit dem signierten Code, den das Computersystem 108 zusammen mit dem Zertifikat 130 von der Kraftfahrzeugelektronik 102 erhalten hat, übereinstimmen, damit die kryptographische Authentifizierung und/oder Authentisierung erfolgen kann.

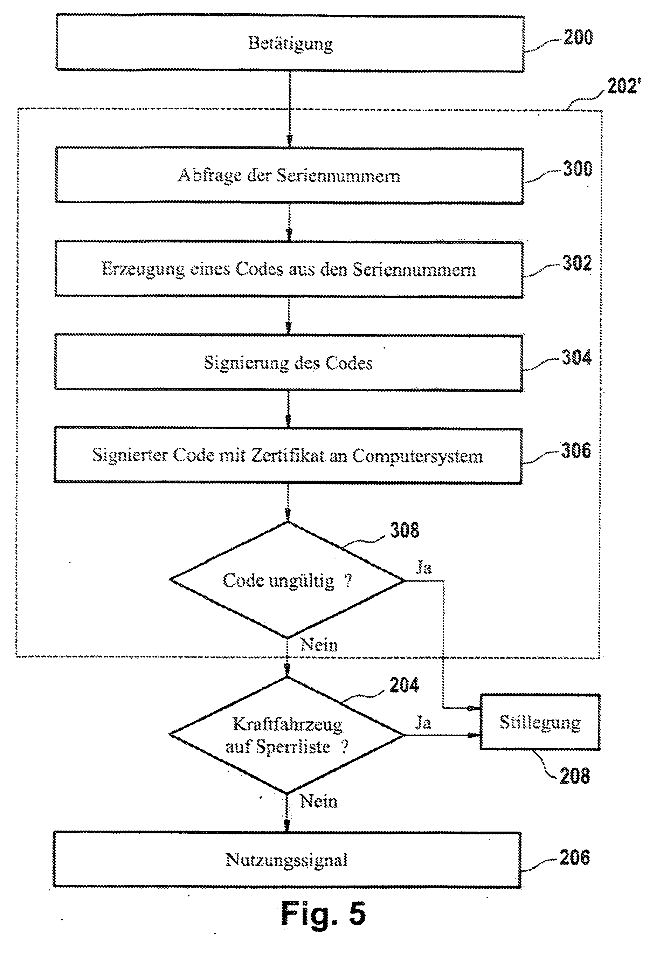

Die Figur 5 zeigt ein entsprechendes Flussdiagramm. Die kryptographische Authentifizierung und/oder Authentisierung des Kraftfahrzeugs kann in dem Schritt 202' der Ausführungsform der Figur 5 wie in dem Schritt 202 der Figur 2 erfolgen. Alternativ oder zusätzlich erfolgt in dem Schritt 300 eine Abfrage der Kennungen, d.h. zum Beispiel der Seriennummern, von einer oder mehrerer der Komponenten der Kraftfahrzeugelektronik durch ein hierzu ausgebildetes Steuergerät. Aus zum Beispiel den Seriennummern generiert dieses Steuergerät in dem Schritt 302 einen kraftfahrzeugspezifischen Code, der in dem Schritt 304 mit Hilfe des geheimen Schlüssels des Kraftfahrzeugs signiert und zusammen mit dem dazugehörigen Zertifikat in dem Schritt. 306 an das Computersystem des Trust-Centers übertragen wird. Dort wird geprüft, ob dieser Code ungültig ist (Schritt 308). Wenn dies der Fall ist, wird danach der Schritt 208 ausgeführt; im gegenteiligen Fall folgt anschließend der Schritt 204.

Die Kommunikation zwischen dem Steuergerät 120 und dem Server 140 erfolgt vorzugsweise über ein Secure Messaging Verfahren.

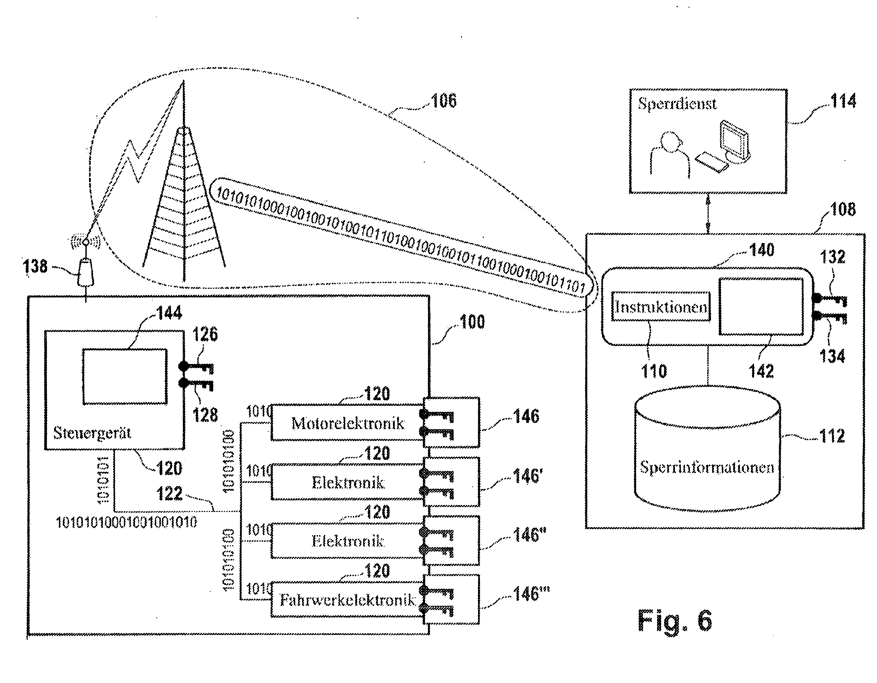

Die Figur 6 zeigt eine Ausführungsform des Kraftfahrzeugs 100 mit einer Mobilfunkantenne 138, die zur Kommunikation über das Mobilfunk-Netzwerk 106 mit dem Computersystem 108 dient. Das Computersystem 108 hat einen Server 140, der zur Ausführung der Instruktionen 110 dient.

Das Schlüsselpaar des Computersystems 140 bestehend aus dem öffentlichen Schlüssel 132 und dem geheimen Schlüssel 134 und ist in dieser Ausführungsform auf einer Chipkarte 142 gespeichert, auf die der Server 140 über ein Chipkartenlesegerät zugreifen kann. Der Speicher 112 zur Speicherung der Sperrliste bzw. der Sperrinformation ist in dieser Ausführungsform als separate Datenbank ausgeführt, die mit dem Server 140 verbunden ist.

Die Komponente A der Kraftfahrzeugelektronik (vgl. Figuren 3 und 4) ist hier als Steuergerät ausgebildet, wobei das asymmetrische Schlüsselpaar 126, 128, welches dem Kraftfahrzeug 100 zugeordnet ist, auf einer Chipkarte 144 gespeichert ist, auf welche das Steuergerät 120 über ein entsprechendes Chipkartenlesegerät zugreifen kann.

Bei den weiteren Komponenten 120 der Kraftfahrzeugelektronik handelt es sich hier um Motorelektronikkomponenten, zwei Elektronikkomponenten sowie Fahrwerkselektronikkomponenten, die jeweils als gesonderte ECUs ausgebildet sein können. In jeder der ECUs ist ein gesondertes asymmetrisches Schlüsselpaar 146, 146', 146", 146'" gespeichert.

Vor der Abfrage der Kennungen, z.B. der Seriennummern, von den Komponenten 120 müssen diese zunächst untereinander und/oder gegenüber dem Steuergerät 120 mit Hilfe der jeweiligen Schlüsselpaare kryptographisch authentifiziert und/oder authentisiert werden.

Hierzu kann wiederum so vorgegangen werden, dass das Steuergerät 120 eine Pseudo-Zufallszahl generiert, diese mit dem öffentlichen Schlüssel des betreffenden Schlüsselpaares, zum Beispiel des Schlüsselpaares 146, verschlüsselt und dann an die betreffende Komponente 120 über das Netzwerk 122 sendet, in dem betrachteten Beispielsfall also an die Motorelektronikkomponente 120.

Die Motorelektronikkomponente 120 entschlüsselt dann das von dem Steuergerät 120 empfangene Chiffrat mit Hilfe des geheimen Schlüssels ihres Schlüsselpaars 146 und sendet das entschlüsselte Chiffrat wieder an das Steuergerät zurück. Nur wenn das von der Motorelektronikkomponente empfangene und entschlüsselte Chiffrat mit der ursprünglich gesendeten Zufallszahl übereinstimmt, ist die Motorelektronikkomponente 120 gegenüber dem Steuergerät 120 authentifiziert und/oder authentisiert, wonach deren Seriennummer abgefragt werden kann.

Falls die kryptographische Authentifizierung und/oder Authentisierung einer der Komponenten 120 gegenüber dem Steuergerät fehlschlägt, so kann dieses nicht den Code generieren, und sendet daher eine entsprechende Fehlermeldung an das Computersystem 108, welches daraufhin die Sperrung des Kraftfahrzeugs 100 veranlassen kann.

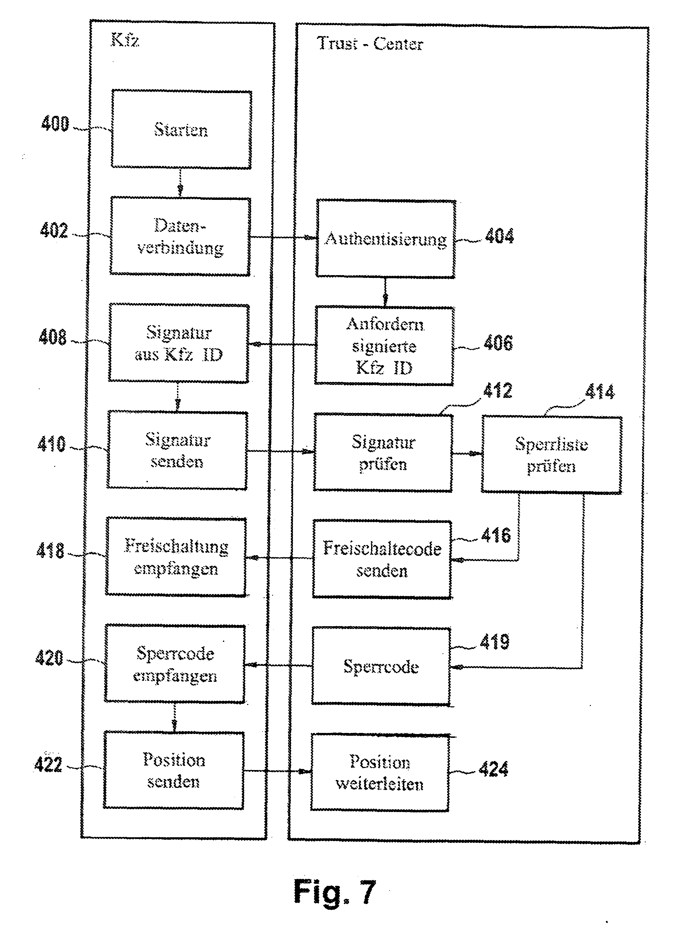

Die Figur 7 zeigt ein anderes Verfahren. In dem Schritt 400 erfolgt eine Betätigung des Kraftfahrzeugs, zum Beispiel durch Drücken eines Starterknopfes (vgl. Schritt 200 der Figuren 2 und 5). Daraufhin wird in dem Schritt 402 eine Kommunikationsverbindung zwischen dem Kraftfahrzeug und dem Trust-Center aufgebaut. Mit Hilfe dieser Datenverbindung erfolgt in dem Schritt 404 ein erster kryptographischer Authentisierungsschritt, zum Beispiel durch den Austausch einer Pseudo-Zufallszahl, wie oben beschrieben.

Nachdem diese erste Stufe der kryptographischen Authentisierung in dem Schritt 404 erfolgreich abgeschlossen ist, fordert das Trust-Center in dem Schritt 406 die signierte Kfz ID von dem Kraftfahrzeug an. Das Kraftfahrzeug bildet daraufhin in dem Schritt 408 eine Signatur auf der Kfz ID und sendet diese Signatur in dem Schritt 410 an das Trust-Center. Dort wird die Signatur in dem Schritt 412 geprüft. Wenn die Signatur gültig ist, ist damit auch die zweite Stufe der kryptographischen Authentisierung erfolgreich abgeschlossen.

Nachfolgend wird in dem Schritt 414 geprüft, ob hinsichtlich des Kraftfahrzeugs eine Sperrung in der Sperrliste eingetragen ist. Wenn dies nicht der Fall ist, wird in dem Schritt 416 ein Nutzungssignal in der Form eines Freischaltecodes an das Kfz gesendet und dort in dem Schritt 418 empfangen, so dass die Nutzung des Kfzs ermöglicht wird.

Wenn dagegen in dem Schritt 414 zutage tritt, dass für das Kraftfahrzeug eine Sperrung in der Sperrliste vermerkt wird, wird nachfolgend in dem Schritt 419 ein Sperrsignal in der Form eines Sperrcodes an das Kraftfahrzeug gesendet und dort in dem Schritt 420 empfangen. Daraufhin ermittelt das Kraftfahrzeug in dem Schritt 422 seine aktuelle geographische Position, beispielsweise durch Abfrage eines GPS-Empfängers, und sendet diese aktuelle Position in dem Schritt 422 an das Trust-Center. Das Trust-Center kann diese Positionsinformation in dem Schritt 424 zum Beispiel an die Polizei weiterleiten.

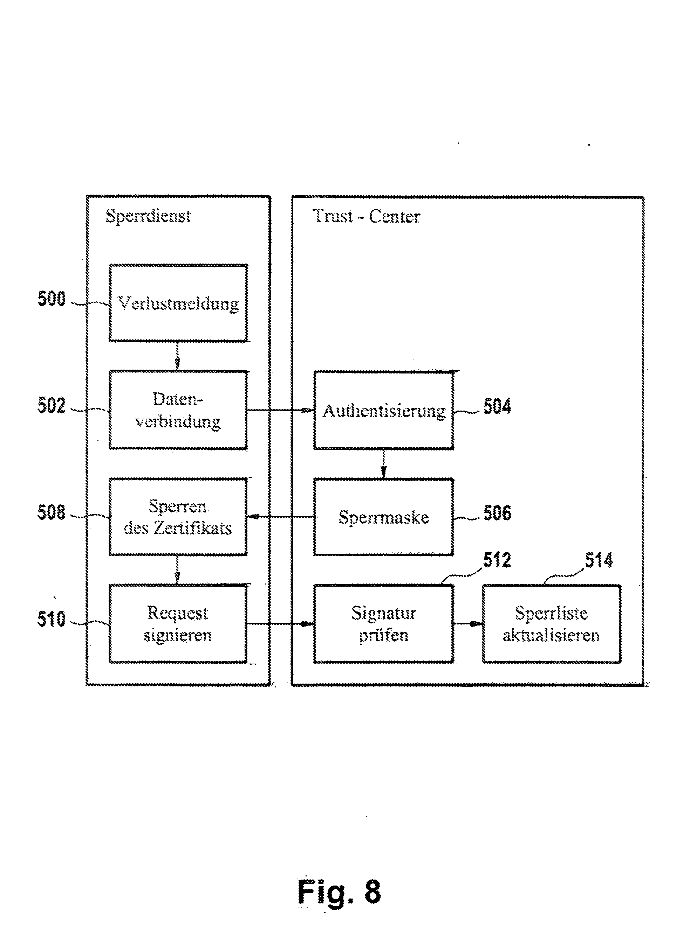

Die Figur 8 zeigt eine Ausführungsform eines Verfahrens zur Aktualisierung der Sperrliste. In dem Schritt 500 erreicht eine Verlustmeldung den Sperrdienst, mit der zum Beispiel der Halter oder der Eigentümer des Kraftfahrzeugs den Diebstahl dieses Kraftfahrzeugs meldet. Daraufhin wird in dem Schritt 502 eine Datenverbindung zwischen dem Sperrdienst und dem Trust-Center aufgebaut.

In dem Schritt 504 wird der Sperrdienst gegenüber dem Trust-Center authentisiert. Nach erfolgreicher Authentisierung generiert das Trust-Center in dem Schritt 506 eine Sperrmaske, in die von dem Sperrdienst aus die Sperrung des Zertifikats, welches dem als gestohlen gemeldeten Kraftfahrzeug zugeordnet ist, eingegeben werden kann (Schritt 508). Die Anforderung ("request") zur Sperrung des Zertifikats wird in dem Schritt 510 mit dem geheimen Schlüssels des Sperrdienst signiert und an das Trust-Center übertragen. Dieses prüft in dem Schritt 512 die Signatur des Sperrdienstes und aktualisiert in dem Schritt 514 die Sperrliste entsprechend, wenn die Signatur gültig ist.

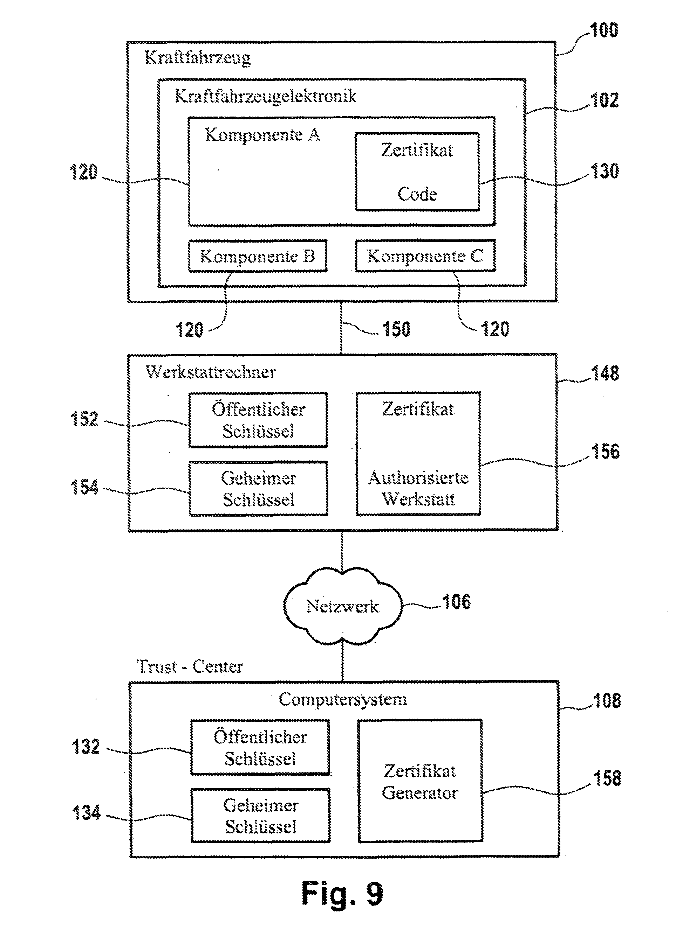

Auch bei hochpreisigen Kraftfahrzeugen kann es gelegentlich vorkommen, dass eine der Komponenten 120 der Kraftfahrzeugelektronik. 102 ausfällt und durch eine neue ersetzt werden muss (vgl. Figuren 3 und 4). Durch einen Austausch einer der Komponenten 120 ändert sich aber zwangsläufig deren Kennung, wie z. B. die Seriennummer, und damit auch der resultierende Code. In diesem Fall muss ggf. das Zertifikat 130 durch ein neues Zertifikat ersetzt werden, welches den aktualisierten Code beinhaltet. Um Manipulationen zu vermeiden, ist dies nur durch hierzu autorisierte Werkstätten möglich, wie in der Figur 9 dargestellt.

Die autorisierte Werkstatt verfügt über einen Werkstattrechner 148, beispielsweise einen speziellen Personalcomputer mit verschiedenen Diagnosefunktionen für die Kraftfahrzeugelektronik 102. Der Werkstattrechner 148 kann beispielsweise unmittelbar überein oder mehrere Kabel 150 mit der Kraftfahrzeugelektronik 102 verbunden- werden.

Der Werkstattrechner hat ein asymmetrisches Schlüsselpaar bestehend aus einem öffentlichen Schlüssel 152 und einem geheimen Schlüssel 154 sowie einem dazugehörigen Zertifikat 156, das der betreffenden autorisierten Werkstatt zugeordnet list. Die autorisierte Werkstatt ist in dem Zertifikat 156 vermerkt.

Der Werkstattrechner 156 kann zum Beispiel über das Netzwerk 106 mit dem Computersystem 108 des Trust-Centers kommunizieren. Das Computersystem 108 hat einen Zertifikatgenerator 158 zur Generierung von Zertifikaten.

Nachdem eine oder mehrere der Komponenten 120 der Kraftfahrzeugelektronik 102 durch entsprechende Ersatzteile ersetzt worden sind, liest der Werkstattrechner 148 aus der Kraftfahrzeugelektronik 102 den daraus resultierenden Code aus. Der Werkstattrechner 148 baut dann eine Verbindung mit dem Computersystem 108 auf und authentisiert sich demgegenüber. Nach erfolgreicher Authentisierung schickt der Werkstattrechner 148 eine Anforderung für ein neues Zertifikat mit dem neuen Code an das Computersystem 108. Daraufhin wird dort der Zertifikatgenerator 158 gestartet, der ein entsprechend aktualisiertes Zertifikat 130 generiert, welches über den Werkstattrechner 148 oder unmittelbar in die Kraftfahrzeugelektronik 102 eingegeben wird, um das bisherige Zertifikat 130 zu überschreiben.

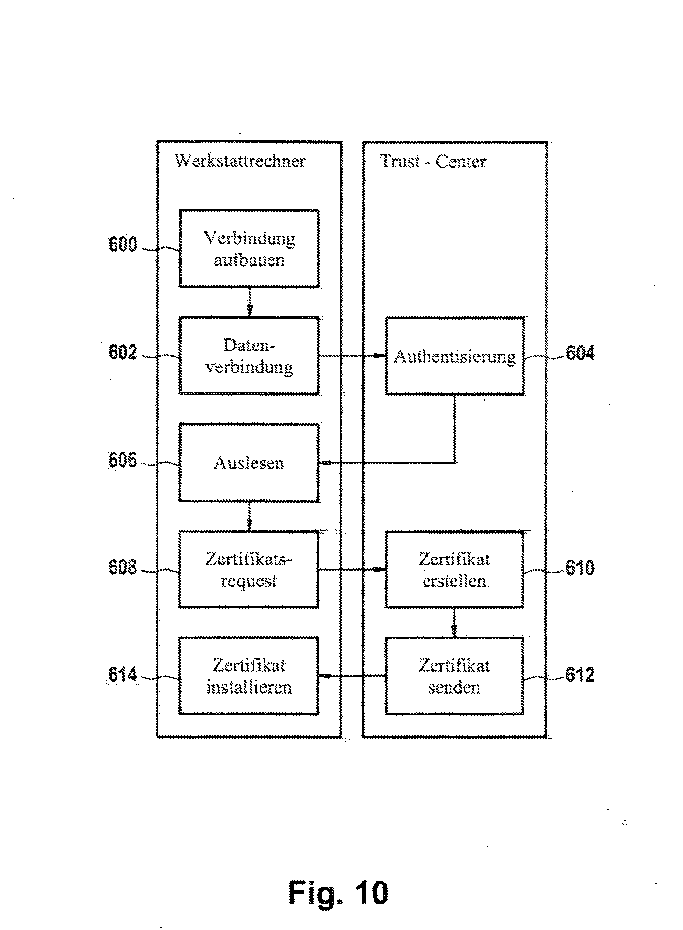

Die Figur 10 zeigt ein entsprechendes Flussdiagramm. Nachdem die Kraftfahrzeugelektronik repariert worden ist, wird eine Datenverbindung zwischen der Kraftfahrzeugelektronik und dem Werkstattrechner aufgebaut (Schritt 600) und in dem Schritt 602. wird eine Datenverbindung zwischen dem Werkstattrechner und dem Trust-Center aufgebaut. Daraufhin wird der Werkstattrechner gegenüber dem Trust-Center in dem Schritt 604 kryptographisch authentifiziert und/oder authentisiert.

Nach erfolgreicher z.B. kryptographischer Authentisierung des Werkstattrechners gegenüber dem Trust-Center liest der Werkstattrechner in dem Schritt 606 den neuen Co= de, der durch den Austausch von einer oder mehrerer der Komponenten der Elektronik resultiert, aus der Kraftfahrzeugelektronik aus (Schritt 606) und sendet auf dieser Grundlage in dem Schritt 608 eine Anforderung für ein entsprechendes neues Zertifikat an das Trust-Center.

Diese Anforderung beinhaltet auch den neuen Code. Das Trust-Center erstellt daraufhin in dem Schritt 610 das neue Zertifikat und sendet dieses in dem Schritt 612 an den Werkstattrechner. Der Werkstattrechner installiert daraufhin in dem Schritt 614 das neue Zertifikat in der Kraftfahrzeugelektronik, indem zum Beispiel das alte Zertifikat durch das neue Zertifikat überschrieben wird. Beispielsweise wird das neue Zertifikat mittels Secure Messaging direkt auf die Chipkarte des Steuergeräts der Kraftfahrzeugelektronik geschrieben (vgl. Steuergerät 120 und Chipkarte 144 der Figur 6).

### Bezugszeichenliste

- 100: Kraftfahrzeug
- 102: Kraftfahrzeugelektronik
- 104: Instruktionen
- 106: Netzwerk
- 108: Computersystem
- 110: Instruktionen
- 112: Speicher
- 114: Computersystem
- 116: Instruktionen
- 118: Anwendungsprogramm
- 120: Komponente
- 122: Netzwerk
- 124: Speicher
- 126: öffentlicher Schlüssel
- 128: geheimer Schlüssel
- 130: Zertifikat
- 132: öffentlicher Schlüssel
- 134: geheimer Schlüssel
- 136: Zuordnungstabelle
- 138: Mobilfunkantenne
- 140: Server
- 142: Chipkarte
- 144: Chipkarte
- 146: Schlüsselpaar
- 148: Werkstattrechner
- 150: Kabel
- 152: öffentlicher Schlüssel
- 154: geheimer Schlüssel
- 156: Zertifikat
- 158: Zertifikatgenerator

## Patentansprüche

1. Verfahren zum Schutz eines beweglichen Gutes (100) gegen unberechtigte Benutzung, wobei es sich bei dem beweglichen Gut um ein Flugzeug, Fahrzeug, insbesondere ein Kraftfahrzeug, oder eine Baumaschine handelt, mit folgenden Schritten:
- kryptographische Authentifizierung und/oder kryptographische Authentisierung des Gutes gegenüber einem externen Computersystem (108), wobei die kryptographische Authentifizierung und/oder kryptographische Authentisierung unter Verwendung eines asymmetrischen Schlüsselpaars (126, 128), das dem Gut zugeordnet ist, durchgeführt wird, wobei das asymmetrische Schlüsselpaar aus einem geheimen Schlüssel (128) und einem öffentlichen Schlüssel (126) besteht, wobei ein Code aus ein oder mehreren Kennungen elektronischer Komponenten (120) des Gutes gewonnen wird, wobei der Code mit Hilfe des geheimen Schlüssels (128) signiert wird, wobei der Code zur Identifizierung des Gutes dient,
- Senden des signierten Codes und eines Zertifikats (130) von dem Gut an das externe Computersystem, wobei das Zertifikat den öffentlichen Schlüssel beinhaltet, wobei das Zertifikat einen Code oder eine das Gut identifizierende Kennung beinhaltet,
- Empfang des signierten Codes und des Zertifikats (130) von dem Gut durch das externe Computersystem,
- Überprüfung der Gültigkeit des signierten Codes mit Hilfe des öffentlichen Schlüssels durch das externe Computersystem, wobei der signierten Code gültig ist, wenn er mit dem Code des Zertifikates übereinstimmt oder wenn der signierte Code mit einem Code übereinstimmt, der in einer Zuordnungstabelle (136) der in dem Zertifikat enthaltenen Kennung zugeordnet ist, wobei die Zuordnungstabelle in dem externen Computersystem gespeichert ist, wobei der signierte Code mit dem Code des Zertifikats verglichen wird, wenn das Zertifikat den Code beinhaltet, und wobei der signierte Code mit dem Code der Zuordnungstabelle verglichen wird, wenn das Zertifikat die das Gut identifizierende Kennung beinhaltet,
- Prüfung, ob für das Gut eine Sperrung gespeichert ist, durch das externe Computersystem,
- Senden eines Nutzungssignals von dem externen Computersystem an das Gut, um eine Nutzung des Gutes zu ermöglichen, wenn für das Gut keine Sperrung gespeichert ist, wobei das Nutzungssignal nur dann abgesendet wird, wenn der signierte Code gültig ist.
- Senden eines Sperrsignals von dem externen Computersystem an das Gut, wobei das Sperrsignal nur dann gesendet wird, wenn für das Gut eine Sperrung gespeichert ist oder der signierte Code ungültig ist.

2. Verfahren nach Anspruch 1, wobei das Computersystem eine Datenbank (112) zur Speicherung von Sperrungen aufweist, und wobei das Computersystem nach Durchführung der kryptographischen Authentifizierung und/oder der kryptographische Authentisierung des Gutes auf die Datenbank zugreift, um zu prüfen, ob in der Datenbank die Sperrung für das Gut gespeichert ist.

3. Verfahren nach einem der vorhergehenden Ansprüche, mit folgenden weiteren Schritten:
- Empfang eines Ersatzcodes durch das Computersystem,
- Generierung eines Ersatzzertifikats für den Ersatzcode,
- Senden des Ersatzzertifikats über eine geschützte Verbindung an das Gut (100), um ein dort gespeichertes Zertifikat (130) zu ersetzen.

4. Verfahren nach Anspruch 1, wobei ein Positionssignal, welches die geographische Position des Gutes angibt, von dem Gut ausgesendet wird, nachdem das Gut das Sperrsignal empfangen hat.

5. Computerprogrammprodukt mit Instruktionen zur Ausführung eines Verfahrens nach einem der vorhergehenden Ansprüche..

6. Bewegliches Gut (100) mit einem elektronischen Gerät (120), wobei es sich bei dem beweglichen Gut um ein Flugzeug, Fahrzeug, insbesondere ein Kraftfahrzeug, oder eine Baumaschine handelt, wobei das elektronische Gerät die folgenden Mittel beinhaltet:
- Mittel (104; 126, 128, 130) zur kryptographischen Authentifizierung und/oder kryptographischen Authentisierung des Gutes (100) gegenüber einem externen Computersystem (108), wobei die kryptographische Authentifizierung und/oder kryptographische Authentisierung unter Verwendung eines asymmetrischen Schlüsselpaars (126, 128), das dem Gut zugeordnet ist, durchgeführt wird, wobei das asymmetrische Schlüsselpaar aus einem geheimen Schlüssel (128) und einem öffentlichen Schlüssel (126) besteht,
- Mittel (104) zur Gewinnung eines Codes aus einer oder mehreren Kennungen (124) des elektronischen Geräts und/oder weiteren mit dem elektronischen Gerät vernetzbaren Elektronikkomponenten (120) des Gutes, wobei der Code zur Identifizierung des Gutes dient,
- Mittel zum Signieren des Codes mit Hilfe des geheimen Schlüssels (128),
- Mittel zum Senden des signierten Codes und eines Zertifikats an das externe Computersystem, wobei das Zertifikat den öffentlichen Schlüssel beinhaltet, wobei das Zertifikat den Code oder eine das Gut identifizierende Kennung beinhaltet, wobei mit Hilfe des beinhalteten Codes oder der beinhalteten, das Gut identifizierenden, Kennung die Gültigkeit des signierten Codes durch das externe. Computersystem überprüfbar ist,
- Mittel (138) zum Empfang eines Nutzungssignals oder eines Sperrsignals vom dem Computersystem.

7. Bewegliches Gut nach Anspruch 6, wobei jeder der elektronischen Komponenten (120) eine Kennung zugeordnet ist, die in einem nicht-flüchtigen Speicher der jeweiligen Komponente gespeichert ist, und wobei die Mittel zur Gewinnung des Codes einen vorgegebenen Algorithmus implementieren und dazu ausgebildet sind, die Kennungen von den verschiedenen elektronischen Komponenten abzufragen, um auf der Basis dieser Kennungen mit Hilfe des vorgegebenen Algorithmus den Code zu generieren.

8. Bewegliches Gut nach Anspruch 6 oder 7, mit Mitteln (146, 146', 146", 146"') zur kryptographischen Authentifizierung und/oder kryptographischen Authentisierung der weiteren Elektronikkomponenten gegenüber dem elektronischen Gerät, wobei diese Mittel aus weiteren asymmetrischen Schlüsselpaaren bestehen, wobei die weiteren asymmetrischen Schlüsselpaare jeweils in einer der weiteren elektronischen Komponenten gespelchert sind, wobei die kryptographische Authentifizierung und/oder kryptographische Authentisierung der weiteren elektronischen Komponenten die folgenden Schritte beinhaltet: Generierung einer Pseudo-Zufallszahl durch das elektronische Gerät, Verschlüsselung der Pseudo-Zufallszahl mit dem öffentlichen Schlüssel des asymmetrischen Schlüsselpaares einer der weiteren Elektronikkomponenten, Senden der verschlüsselten Pseudo-Zufallszahl an diese weitere Elektronikkomponente, Entschlüsselung der empfangenen Pseudo-Zufallszahl mit Hilfe des geheimen Schlüssels des asymmetrischen Schlüsselpaars dieser weiteren Elektronikkomponente durch die weitere Elektronikkomponente, und Zurücksenden der entschlüsselten Pseudo-Zufallszahl an das elektronische Gerät.

9. Bewegliches Gut nach einem der Ansprüche 6-8, wobei es sich bei dem elektronischen Gerät um ein Kraftfahrzeugelektronik-Gerät, insbesondere ein Steuergerät (120) handelt.

## Claims

1. Method for protecting a movable item (100) against unauthorized use, wherein the moving item is an aircraft, vehicle, particularly a motor vehicle, or a construction machine, having the following steps:
- the item is cryptographically authenticated to an external computer system (108), wherein the cryptographical authentication is performed using an asymmetric key pair (126, 128) which is associated with the item, wherein the asymmetric key pair comprises a secret key (128) and a public key (126), wherein a code is obtained from one or more identifiers of electronic components (120) of the item, wherein the code is signed using the secret key (128), wherein the code is used to identify the item,
- the signed code and a certificate (130) are sent from the item to the external computer system, wherein the certificate contains the public key, wherein the certificate contains a code or an identifier identifying the item,
- the signed code and the certificate (130) are received from the item by the external computer system,
- the validity of the signed code is checked using the public key by the external computer system, wherein the signed code is valid if it matches the code of the certificate or if the signed code matches a code which is associated, in an association table (136), with the identifier contained in the certificate, wherein the association table is stored in the external computer system, wherein the signed code is compared with the code in the certificate when the certificate contains the code, and wherein the signed code is compared with the code in the association table when the certificate contains the identifier identifying the item,
- a check is performed by the external computer system to determine whether a block is stored for the item,
- a use signal is sent from the external computer system to the item in order to allow use of the item when no block is stored for the item, wherein the use signal is sent only if the signed code is valid,
- a block signal is sent from the external computer system to the item, wherein the block signal is sent only if a block is stored for the item or the signed code is invalid.

2. Method according to Claim 1, wherein the computer system has a database (112) for storing blocks, and wherein the computer system accesses the database, following performance of the cryptographical authentication of the item, in order to check whether the database stores the block for the item.

3. Method according to one of the preceding claims, having the following further steps:
- a substitute code is received by the computer system,
- a substitute certificate is generated for the substitute code,
- the substitute certificate is sent via a protected connection to the item (100) in order to replace a certificate (130) stored therein.

4. Method according to Claim 1, wherein a position signal which indicates the geographical position of the item is sent by the item after the item has received the block signal.

5. Computer program product having instructions for carrying out a method according to one of the preceding claims.

6. Moving item (100) having an electronic appliance (120), wherein the moving item is an aircraft, vehicle, particularly a motor vehicle, or a construction machine, wherein the electronic appliance contains the following means:
- means (104; 126, 128, 130) for cryptographically authenticating the item (100) to an external computer system (108), wherein the cryptographical authentication is performed using an asymmetric key pair (126, 128) which is associated with the item, wherein the asymmetric key pair comprises a secret key (128) and a public key (126),
- means (104) for obtaining a code from one or more identifiers (124) of the electronic appliance and/or further electronic components (120) of the item which are able to be networked to the electronic appliance, wherein the code is used to identify the item,
- means for signing the code using the secret key (128),
- means for sending the signed code and a certificate to the external computer system, wherein the certificate contains the public key, wherein the certificate contains the code or an identifier identifying the item, wherein the code contained or the identifier, identifying the item, contained can be used by the external computer system to check the validity of the signed code,
- means (138) for receiving a use signal or a block signal from the computer system.

7. Moving item according to Claim 6, wherein each of the electronic components (120) has an associated identifier which is stored in a non-volatile memory in the respective component, and wherein the means for obtaining the code implement a prescribed algorithm and are designed to request the identifiers from the various electronic components in order to generate the code on the basis of these identifiers using the prescribed algorithm.

8. Moving item according to Claim 6 or 7, having means (146, 146', 146", 146"') for cryptographically authenticating the further electronic components to the electronic appliance, wherein these means comprise ) further asymmetric key pairs, wherein the further asymmetric key pairs are each stored in one of the further electronic components, wherein the cryptographical authentication of the further electronic components contains the following steps: a pseudo-random number is generated by the electronic appliance, the pseudo-random number is encrypted with the public key from the asymmetric key pair of one of the further electronic components, the encrypted pseudo-random number is sent to this further electronic component, the received pseudo-random number is decrypted using the secret key from the asymmetric key pair of this further electronic component by the further electronic component, and the decrypted pseudo-ransom number is returned to the electronic appliance.

9. Moving item according to one of Claims 6-8, wherein the electronic appliance, is a motor vehicle electronics appliance, particularly a controller (120).

## Revendications

1. Procédé de protection d'un objet mobile (100) contre une utilisation non autorisée, l'objet mobile étant un avion, un véhicule et en particulier un véhicule automobile ou un engin de construction, le procédé comportant les étapes suivantes :
- authentification cryptographique et/ou identification cryptographique de l'objet dans un système informatique externe (108), l'authentification cryptographique et/ou l'identification cryptographique étant réalisées en recourant à une paire de clés asymétriques (126, 128) associées à l'objet, la paire de clés asymétriques étant constituée d'une clé secrète (128) et d'une clé publique (126), un code provenant d'une ou plusieurs caractéristiques de composants électroniques (120) de l'objet étant récupéré, le code étant signé à l'aide de la clé secrète (128), le code servant à identifier l'objet,
- envoi du code signé et d'un certificat (130) par l'objet au système informatique externe, le certificat contenant la clé publique, le certificat contenant un code ou une caractéristique qui identifie l'objet,
- réception du code signé et du certificat (130) de l'objet par le système informatique externe,
- à l'aide de la clé publique, vérification par le système informatique externe de la validité du code signé, le code signé étant valide s'il correspond au code du certificat ou si le code signé correspond à un code associé dans un tableau d'attribution (136) à la caractéristique que contient le certificat, le tableau d'attribution étant conservé en mémoire dans le système informatique externe, le code signé étant comparé au code du certificat si le certificat contient le code et le code signé étant comparé au code du tableau d'attribution si le certificat contient la caractéristique qui identifie l'objet,
- vérification par le système informatique externe si un blocage est conservé en mémoire pour l'objet,
- envoi par le système informatique externe d'un signal d'utilisation à l'objet pour permettre l'utilisation de l'objet si aucun blocage n'a été conservé en mémoire pour l'objet, le signal d'utilisation n'étant envoyé que si le code signé est valide et
- envoi par le système informatique externe d'un signal de blocage à l'objet, le signal de blocage n'étant envoyé que si un blocage a été conservé en mémoire pour l'objet ou si le code signé est invalide.

2. Procédé selon la revendication 1, dans lequel le système informatique présente une base de données (112) qui conserve les blocages, le système informatique accédant à la base de données après avoir exécuté l'authentification cryptographique et/ou l'identification cryptographique de l'objet pour vérifier si le blocage de l'objet a été conservé en mémoire dans la base de données.

3. Procédé selon l'une des revendications précédentes, qui présente les étapes supplémentaires suivantes :
- réception d'un code de remplacement par le système informatique,
- création d'un certificat de remplacement pour le code de remplacement,
- envoi du certificat de remplacement par une liaison sécurisée l'objet (100) pour remplacer un certificat (130) qui y est conservé en mémoire.

4. Procédé selon la revendication 1, dans lequel un signal de position qui donne la position géographique de l'objet est envoyé par l'objet après que l'objet a reçu le signal de blocage.

5. Produit de programme informatique doté d'instructions permettant l'exécution d'un procédé selon l'une des revendications précédentes.

6. Objet mobile (100) doté d'un appareil électronique (120), l'objet mobile étant un avion, un véhicule et en particulier un véhicule automobile ou un engin de chantier, l'appareil électronique contenant les moyens suivants :
- des moyens (104; 126, 128, 130) d'authentification cryptographique et/ou d'identification cryptographique de l'objet (100) dans un système informatique externe (108), l'authentification cryptographique et/ou l'identification cryptographique étant réalisées en recourant à une paire de clés asymétriques (126, 128) associées à l'objet, la paire de clés asymétriques étant constituée d'une clé secrète (128) et d'une clé publique (126),
- des moyens (104) d'obtention d'un code à partir d'une ou plusieurs caractéristiques (124) de l'appareil électronique et/ou d'autres composants électroniques (120) de l'objet qui peuvent être mis en réseau avec l'appareil électronique, le code servant à identifier l'objet,
- des moyens de signature du code à l'aide de la clé secrète (128),
- des moyens pour envoyer le code signé et un certificat au système informatique externe, le certificat contenant la clé publique, le certificat contenant le code ou une caractéristique qui identifie l'objet, le système informatique externe pouvant vérifier la validité du code signé à l'aide du code contenu ou de la caractéristique contenue qui identifie l'objet, et
- des moyens (138) de réception d'un signal d'utilisation ou d'un signal de blocage en provenance du système informatique.

7. Objet mobile selon la revendication 6, dans lequel une caractéristique conservée en mémoire dans une mémoire non volatile de chaque composant est associée à chacun des composants électroniques (120), et les moyens d'obtention du code mettant en oeuvre un algorithme prédéterminé et étant configurés pour demander les caractéristiques des différents composants électroniques pour, sur base de ses caractéristiques, produire le code à l'aide de l'algorithme prédéterminé.

8. Objet mobile selon les revendications 6 ou 7, doté de moyens (146, 146', 146", 146"') d'authentification cryptographique et/ou d'identification cryptographique des autres composants électroniques dans l'appareil électronique externe, ces moyens étant constitués d'autres paires de clés asymétriques, les autres paires de clés asymétriques étant conservées chacune dans un des autres composants électroniques respectifs, l'authentification cryptographique et/ou l'identification cryptographique des autres composants électroniques comprenant les étapes suivantes : production d'un nombre pseudo-aléatoire par l'appareil électronique, cryptage du nombre pseudo-aléatoire avec la clé publique de la paire de clés asymétriques de l'un des autres composants électroniques, envoi du nombre pseudo-aléatoire crypté à cet autre composant électronique, décryptage du nombre pseudo-aléatoire reçu, à l'aide de la clé publique de la paire de clés asymétriques de cet autre composant électronique par l'autre composant électronique et renvoi du nombre pseudo-aléatoire décrypté à l'appareil électronique.

9. Objet mobile selon l'une des revendications 6 à 8, dans lequel l'appareil électronique est un appareil électronique d'un véhicule automobile et en particulier un appareil de commande (120).
